# EUROPÄISCHE PATENTSCHRIFT

(11) **EP 2 122 189 B1**
(45) Veröffentlichungstag und Bekanntmachung des Hinweises auf die Patenterteilung: **23.11.2011**
(21) Anmeldenummer: 08708982.7
(22) Anmeldetag: 14.02.2008
(51) Int. Cl.: F16D 3/20

(54) **GLEICHLAUFGELENKWELLE FÜR EIN KFZ**
CONSTANT-VELOCITY JOINT SHAFT FOR A MOTOR VEHICLE
ARBRE A JOINT HOMOCINETIQUE POUR VEHICULE

(30) Priorität: 15.02.2007 DE 102007008057
(43) Veröffentlichungstag der Anmeldung: 25.11.2009
(73) Patentinhaber: Neapco Europe GmbH, 52351 Düren (DE)
(72) Erfinder: SCHWAB, Marco, 50823 Köln (DE); HÖKS, Luis, 52249 Eschweiler (DE); FELCHNER, Christian, 42369 Wuppertal (DE)
(74) Vertreter: Vorberg, Jens
(86) Internationale Anmeldenummer: PCT/EP2008/051782
(87) Internationale Veröffentlichungsnummer: WO 2008/098983

(56) Entgegenhaltungen:
- DE-A1- 3 128 682
- DE-A1- 10 220 836
- US-A1- 2007 066 407
- US-E- R E30 606

## Beschreibung

Gegenstand der vorliegenden Erfindung ist eine Gleichlaufgelenkwelle für ein Kraftfahrzeug, die insbesondere als Antriebswelle für ein vorderradgetriebenes Kraftfahrzeug geeignet ist.

Derartige Gleichlaufgelenkwellen sind aus dem Stand der Technik an sich bekannt. Eine vielfältig verwendete Ausgestaltung umfasst ein außenseitiges Gleichlaufgelenk zur drehfesten Verbindung mit einem Antriebsrad des Kraftfahrzeugs, wobei das Gleichlaufgelenk eine außen liegende Kugelschale und einen innen liegenden Kugelstern umfasst, zwischen denen Kugeln angeordnet sind.

Weiterhin umfasst die Gleichlaufgelenkwelle ein innen liegendes Verschiebegelenk, welches zur drehfesten Verbindung mit einem Differentialgetriebe vorgesehen ist. Das Verschiebegelenk weist dabei eine Tulpe auf, die eine Mehrzahl von in Längsrichtung ausgedehnten und entlang des Innenumfangs gleichverteilten Laufbahnen ausbildet. Weiterhin umfasst das Verschiebegelenk einen Tripodestern, der mehrere Zapfen ausbildet, wobei jeder Laufbahn der Tulpe ein Zapfen des Tripodesterns zugeordnet ist. In die Laufbahnen der Tulpe sind Wälzlager eingeführt, in deren Innenring die Zapfen des Tripodesterns eingreifen.

Das Gleichlaufgelenk erlaubt eine Abwinklung zwischen Antriebs- und Abtriebswelle von 35° und darüber, wobei der Gleichlauf von Antriebswelle und Abtriebswelle gewährleistet ist. Das Gleichlaufgelenk stellt jedoch keinen Längenausgleich zwischen Antriebs- und Abtriebswelle bereit. Das Verschiebegelenk hingegen erlaubt eine Abwinklung zwischen Antriebs- und Abtriebswelle in einem ähnlichen Winkelbereich bei gleichzeitigem Gleichlauf von Antriebs- und Abtriebswelle, es stellt aber darüber hinaus auch einen Längenausgleich zwischen Antriebs- und Abtriebswelle bereit, der im Bereich von einigen Zentimetern liegen kann.

Zur Vermeidung von NVH-Problemen ("Noise, Vibration, Harshness") bei der Verwendung der vorgenannten Gleichlaufgelenkwellen wird gemäß dem Stand der Technik versucht, das Winkelspiel sowohl im Gleichlaufgelenk als auch im Verschiebegelenk zu minimieren, wobei ein Winkelspiel von 0° als technisch optimal angesehen wird Entsprechend werden alle Herstellungsverfahren der Gelenke fortlaufend dahingehend optimiert, das Winkelspiel soweit wie möglich zu eliminieren. Gängige Gleichlaufgelenke weisen ein Winkelspiel im Bereich von 0,3° oder besser auf, in Großserie hergestellte gängige Verschiebegelenke bewegen sich beim Winkelspielgegenwärtig im Bereich von 0,6°± 0,3°.

Um unerwünschte Vibrationen der Verbindungswelle, die zwischen Gleichlaufgelenk und Verschiebegelenk eingefügt ist und über keine starre Lagerung verfügt, möglichst weitgehend zu unterdrücken, hat es sich im Stand der Technik durchgesetzt, zwischen dem Kugelstern des Gleichlaufgelenks und der Verbindungswelle eine drehfeste Verbindung, beispielsweise mittels einer Passverzahnung herzustellen, die sowohl in Drehrichtung als auch in Axialrichtung praktisch spielfrei ist. Hierzu kann ein Presssitz des innenverzahnten Kugelsterns auf der außenverzahnten Verbindungswelle herstellt werden, bei der zur Verschiebung des Kugelsterns auf der Verbindungswelle zumindest eine Kraft von 500 kN, bevorzugt von mehr als 1.000 kN erforderlich ist.

Auch die Verbindung zwischen dem Tripodestern des Verschiebegelenks und der Verbindungswelle wird nach dem Stand der Technik als drehfeste und sowohl in Axialrichtung als auch Drehrichtung möglichst spielfreie Verbindung ausgeführt. Auch hier kommt eine Verbindung über eine Passverzahnung in Frage, bei der der Tripodestern mittels eines Presssitzes auf der Verbindungswelle festgelegt wird.

Obwohl die vorgenannte Konstruktion eine Verbesserung der NVH-Eigenschaften der gattungsgemäßen Gleichlaufgelenkwellen bewirkt hat, so treten aufgrund der neuartigen Anforderungen an das Gewicht der Kraftfahrzeuge neue NVH-Probleme im Zusammenhang mit den an den gattungsgemäßen Gleichlaufgelenkwellen auf. Der Zwang zur Gewichtsreduzierung des gesamten Kraftfahrzeugs führt im zunehmenden Maße zur Verwendung leichtgewichtiger Motoren, deren Motorblock beispielsweise auf Aluminiumlegierungen besteht. Auch im Karosseriebau führt der zunehmende Leichtbau dazu, dass die Karosserie insgesamt weniger steif gegenüber Vibrationen ist. Die Leichtgewichtigen Motoren erzeugen darüber hinaus Vibrationen in einem höher frequenten Frequenzbereich als die bislang verwendeten Motoren, deren Motorblöcke beispielsweise aus Grauguss gefertigt waren. In Verbindung mit den stetig zunehmenden Drehmomenten, die von modernen Motoren bereitgestellt werden, sind an gattungsgemäßen Gleichlaufgelenkwellen NVH-Probleme aufgetreten, die durch die vorgenannte Konstruktion eigentlich als überwunden angesehen worden waren. So konnte bei neuen Fahrzeugen mit Leichtbaukarosserien und Leichtmetallmotoren das Auftreten unangenehmer "Kratzender" Geräusche ("scratch") insbesondere im Lastwechselbereich bemerkt werden, die auf die gattungsgemäßen Gleichlaufgelenkwellen zurückzuführen waren.

Eine weitere Gleichlaufgelenkwelle ist z.B. aus US RE 30606 E bekannt.

Aufgabe der vorliegenden Erfindung ist es daher, eine Gleichlaufgelenkwelle anzugeben, die die neu aufgetretenen NVH-Probleme überwindet. Darüber hinaus ist Aufgabe der vorliegenden Erfindung, ein Verfahren anzugeben, mit dem eine Gleichlaufgelenkwelle für ein Kraftfahrzeug hergestellt werden kann, welche die vorgenannten Probleme überwindet.

Gelöst wird diese Aufgabe durch eine Cileichlaufgelenkwelle mit den Merkmalen des Anspruchs 1 sowie durch ein Verfahren mit den Verfahrensschritten des Anspruchs 11.

Eine erfindungsgemäße Gleichlaufgelenkwelle für ein Kraftfahrzeug umfasst ein Gleichlaufgelenk mit einer außenliegenden Kugelschale und einem innenliegenden Kugelstern, zwischen denen eine Mehrzahl von Kugeh eingefügt ist. Weiterhin umfasst die Gleichlaufgelenkwelle ein Verschiebegelenk mit einer Tulpe, die eine Mehrzahl von in Längsrichtung ausgedehnten und entlang des Innenumfangs gleichverteilten Laufbahnen ausbildet. Das Verschiebegelenk umfasst weiterhin einen Tripodestern, welcher Zapfen ausbildet, wobei jeder Zapfen einer Laufbahn der Tulpe zugeordnet ist. Schließlich umfasst die Gleichlaufgelenkwelle eine Verbindungsgelenkwelle, die drehfest verbunden ist mit dem Kugelstern des Gleichlaufgelenks und dem Tripodestern des Verschiebegelenks. Insoweit entspricht die erfindungsgemäße Gleichlaufgelenkwelle den aus dem Stand der Technik vorbekannten Gelenkwellen.

Erfindungsgemäß ist nun vorgesehen, dass die drehfeste Verbindung zwischen Kugelstern und Verbindungswelle in Axialrichtung einen sehrleichtgängigen Schiebesitz ausbildet. Dies ist in deutlicher Abkehr von der Lehre des Stands der Technik, wonach der Kugelstern einen Presssitz auf der Verbindungswelle ausbilden soll.

Weiterhin ist erfindungsgemäß vorgesehen, dass das Winkelspiel zwischen Verbindungswelle und Tulpe des Verschiebegelenks zwischen 0,3° und 1,4 ° beträgt.

Im Rahmen aufwendiger Untersuchungen konnte festgestellt werden, dass eine Kombination aus einem Schiebesitz der Verbindungswelle im Kugelstern des Gleichlaufgelenks mit einem kontrollierten Winkelspiel der im Tripodestern des Verschiebegelenks gelagerten Verbindungswelle zur einer dramatischen Reduzierung der aufgetretenen NVH-Probleme führt. Insbesondere konnte durch die erfindungsgemäße Kombination von Schiebesitz und Winkelspiel das Frequenzspektrum der an der erfindungsgemäßen Gleichlaufgelenkwelle auch unter ungünstigen Betriebsbedingungen wie Lastwechselsituationen so beeinflusst werden, dass praktisch keine Vibrationen bzw. Geräusche im Inneren der Fahrgastzelle mehr wahrnehmbar sind. Die drehfeste Verbindung zwischen Verbindungswelle und Kugelstern des Gleichlaufgelenks beziehungsweise Verbindungswelle und Tripodestern des Verschiebegelenks wird dabei bevorzugt als Passverzahnung ausgebildet, da diese Art drehfester Verbindungen fertigungstechnische Vorteile aufweist. Darüber hinaus sind selbstverständlich auch alternative drehfeste Verbindungsarten möglich und unter Umständen technisch sinnvoll, beispielsweise die Herstellung einer Welle-Nabe-Verbindung zwischen Verbindungswelle und Kugelstern beziehungsweise Tripodestern unter Ausbildung einer Verbindungsstruktur mit polygonalem Querschnitt.

Im Zusammenhang mit der vorliegenden Erfindung wird es als Schiebesitz des Kugelsterns auf der Verbindungswelle angesehen, wenn zum Verschieben des Kugelsterns auf der Verbindungswelle eine Axialkraft erforderlich ist, die geringer ist als 500 kN. Bevorzugt sind Axialkräfte von weniger als 100 kN, wobei sich bei der praktischen Erprobung der erfindungsgemäßen Gleichlaufgelenkwelle herausgestellt hat, dass ein drehfester Schiebesitz des Kugelsterns auf der Verbindungswelle mit ausreichender Spielfreiheit in Bezug auf die Drehrichtung realisierbar ist, bei der die Verschiebekraft im Bereich von 100 N liegt.

Besonders vorteilhafte NVH-Eigenschaften weist die erfindungsgemäße Gleichlaufgelenkwelle auf, wenn das Winkelspiel zwischen Verbindungswelle und Tulpe des Vemchiebegelenks größer ist als 0,6°.

Weitere Vorteile ergeben sich, wenn die drehfeste Verbindung zwischen Kugelstern beziehungsweise Tripodestern und Verbindungswelle als Passverzahnung mit Evolventenflanken, Kerbflanken oder Keilflanken ausgebildet ist.

Bezüglich des Winkelspiels des Gleichlaufgelenks hat es sich als vorteilhaft herausgestellt, wenn das Winkelspiel zwischen Verbindungswelle und Kugelschale des Gleichlaufgelenks geringer ist als 0,6°, bevorzugt aber 0,3° oder weniger beträgt. Dabei wird in der Praxis die drehfeste Verbindung zwischen Kugelstern und Verbindungswelle praktisch spielfrei ausgeführt werden, so dass das vorstehend genannte Winkelspiel im Wesentlichen durch das Winkelspiel des Gleichlaufgelenks bestimmt ist.

Besondere Vorteile insbesondere in Bezug auf die Sicherheit der erfindungsgemäßen Gleichlaufgelenkwelle ergeben sich, wenn die Axialbewegung des Kugelsterns auf der Verbindungswelle durch ein Anschlagelement limitiert ist. Ein solches Anschlagelement kann beispielsweise als Sicherungsring ausgebildet sein, welcher in eine Nut eingreift, die auf der Verbindungswelle ausgebildet ist.

Weiterhin wurde festgestellt, dass die NVH-Eigenschaften der erfindungsgemäßen Gleichlaufgelenkwelle nochmal verbessert werden können, wenn ein Dämpfungselement auf der Verbindungswelle vorgesehen wird, welches die Axialbewegung des Kugelsterns des Gleichlaufgelenks auf der Verbindungswelle dämpft. Als geeignete Dämpfungselemente haben sich hier beispielsweise ringförmige Dämpferelemente aus polymeren Werkstoffen mit elastomeren Eigenschaften erwiesen.

Schließlich konnte festgestellt werden, dass die NVH-Eigenschaften der erfindungsgemäßen Gleichlaufgelenkwelle positiv beeinflusst werden können, wenn bei unveränderten Dimensionen der Cileichlaufgclenkwelle, insbesondere des Gleichlaufgelenks und des Verschiebegelenks sowie der Länge der Verbindungswelle, der Durchmesser der Verbindungswelle erhöht wird. Besonders gute Ergebnisse bezüglich des NVH-Verhaltens konnten erhalten werden, wenn der Durchmesser der Verbindungswelle zumindest 35% des Außendurchmessers des Kugelsterns betrug, bevorzugt auch darüber. Selbstverständlich weist die erfindungsgemäße Gleichlaufgelenkwelle aber auch bei kleineren Außendurchmessern der Verbindungswelle weiterhin die erfindungsgemäßen vorteilhaften NVH-Eigenschaften.

Das erfimdungsgemäße Verfahren zur Herstellung einer Gleichlaufgelenkwelle für ein Kraftfahrzeuges umfasst die folgenden Verfahrensschritte:
a) Bereitstellen eines Gleichlaufgelenks mit einer außenliegenden Kugelschale und einem innenliegenden Kugelstern,
b) Bereitstellen eines Verschiebegelenks mit einer Tulpe, die eine Mehrzahl von in Längsrichtung ausgedehnten und entlang des Innenumfangs gleichverteilte Laufbahnen ausbildet, und mit einem mehrere Zapfen ausbildenden Tripodestern, wobei jeder Laufbahn der Tulpe ein Zapfen des Tripodesterns zugeordnet ist, und
c) Bereitstellen einer Verbindungswelle.

Die erfindungsgemäßen Vorteile werden realisiert, indem die folgenden Verfahrensschritte ausgeführt werden:
d) Herstellen einer drehfesten Verbindung zwischen Kugelstern und Verbindungswelle, wobei die drehfeste Verbindung in Axialrichtung einen Schiebesitz ausbildet, und
e) Herstellen einer drehfesten Verbindung zwischen Tripodestern und Verbindungswelle, wobei der Winkelspiel zwischen Verbindungswelle und Tulpe des Verschiebegelenks zwischen 0,3° und 1,4° beträgt.

Besondere Vorteile ergeben sich, wenn die drehfeste Verbindung zwischen Tripodestern und Verbindungswelle so ausgeführt wird, dass sie im Wesentlichen spielfrei in Axialrichtung und in Drehrichtung ist.

Weitere Vorteile ergeben sich, wenn die drehfeste Verbindung zwischen Kugelstern und Verbindungswelle so hergestellt wird, dass der Schiebesitz des Kugelsterns auf der Verbindungswelle im Wesentlichen spielfrei in Drehrichtung ist. Entsprechende drehfeste Verbindungen lassen sich insbesondere als Passverzahnung ausbilden. Als geeignete Zahnformen haben sich hier Verzahnungen mit Evolventenflanken, Kerbflanken oder Keilflanken erwiesen.

Der verbindungsgemäß herzustellende Schiebesitz des Kugelsterns auf der Verbindungswelle kann dadurch charakterisiert werden, dass die zum Verschieben des Kugelsterns auf der Verbindungswelle erforderliche Axialkraft geringer ist als 500 kN. Bevorzugt werden hier Werte von weniger als 100 kN, in der praktischen Erprobung haben sich auch Werte als vorteilhaft erwiesen, die wesentlich unter den angegebenen Werten liegen, insbesondere im Bereich von 100 N. Als Presssitz wird im Kontext der vorliegenden Erfindung hingegen verstanden, wenn die zum Verschieben des Kugelsterns auf der Verbindungswelle erforderliche Axialkraft 500 kN oder mehr beträgt.

Weitere Vorteile ergeben sich, wenn das beim Herstellen einer drehfesten Verbindung zwischen Tripodestern und Verbindungswelle eingestellte Winkelspiel zwischen Verbindungswelle und Tulpe des Verschiebegelenks größer ist als 0,6°. Hierbei ist es insbesondere möglich, die drehfeste Verbindung zwischen Tripodestern und Verbindungswelle im Wesentlichen spielfrei in Axialrichtung auszugestalten, so dass das angegebene Winkelspiel praktisch vollständig durch das Winkelspiel des Verschiebegelenks bestimmt ist.

Im Rahmen des erfindungsgemäße Verfahrens muss also ein entsprechender Schiebesitz des Kugelstern auf der Verbindungswelle erzeugt werden, was bei Verwendung einer Passverzahnung beispielsweise durch geeignete Vorbehandlung der Innen- und/oder Außenverzahnung erzielt werden kann. Insbesondere können hierzu die Verbindungswelle und der Kugelstern mit einer Passverzahnung versehen werden, die mit einer solchen Abmessung und Toleranz versehen ist, dass sie im Wesentlichen einen spielfreien Sitz des Kugelstern auf der Verbindungswelle sowohl in Axialrichtung als auch in Drehrichtung bewirkt. Nachfolgend kann dann die Innen- bzw. Außenverzahnung z. B. mittels Sandstrahlen geeignet behandelt werden, so dass der ursprüngliche Presssitz des Kugelsterns auf der Verbindungswelle im Sinne der vorstehend genannten Verschiebekräfte zu einem Schiebesitz wird.

Weiterhin hat es sich als vorteilhaft bezüglich der NVH-Eigenschaften der Gleichlaufgelenkwelle, die mittels des erfindungsgemäßen Verfahrens hergestellt wird, herausgestellt, wenn beim Herstellen einer drehfesten Verbindung zwischen Kugelstern und Verbindungswelle das sich ergebende Winkelspiel zwischen Verbindungswelle und Kugelschale des Gleichlaufgelenks geringer ist als 0,6°, bevorzugt 0,3° oder weniger, beträgt. Da die drehfeste Verbindung in aller Regel in Drehrichtung soweit wie möglich spielfrei ausgestaltet werden wird, bedeutet dies, dass im Rahmen des erfindungsgemäßen Verfahrens Gleichlaulgelenke zu selektieren sind, deren Winkelspiel im angegebenen Toleranzbereich liegt. Ebenso sind im Rahmen des erfindungsgemäßen Verfahrens in der Regel Verschiebegelenke zu selektieren, deren Winkelspiel im angegebenen erfindungsgemäßen Winkelbereich, insbesondere im bevorzugten Winkelbereich, liegen.

Schließlich kann das erfindungsgemäße Verfahren vorteilhaft dahingehend weitergebildet werden, dass zur Dämpfung der Axialbewegung des Kugelsterns auf der Verbindungswelle ein Dämpfungselement auf der Verbindungswelle angeordnet wird. Das Anordnen des Dämpfungselements kann be i-spielsweise im Zusammenhang mit dem Herstellen der drehfesten Verbindung zwischen dem Kugelstern und der Verbindungswelle erfolgen.

Weitere Vorteile und Merkmale der erfindungsgemäßen Verbindungswelle sowie des erfindungsgemäßen Verfahrens zum Herstellen einer Verbindungswelle ergeben sich aus den Unteransprüchen sowie dem nachfolgenden Ausführungsbeispiel, welches nicht einschränkend zu verstehen ist und anhand der Zeichnung nachfolgend erläutert wird. In dieser zeigt:

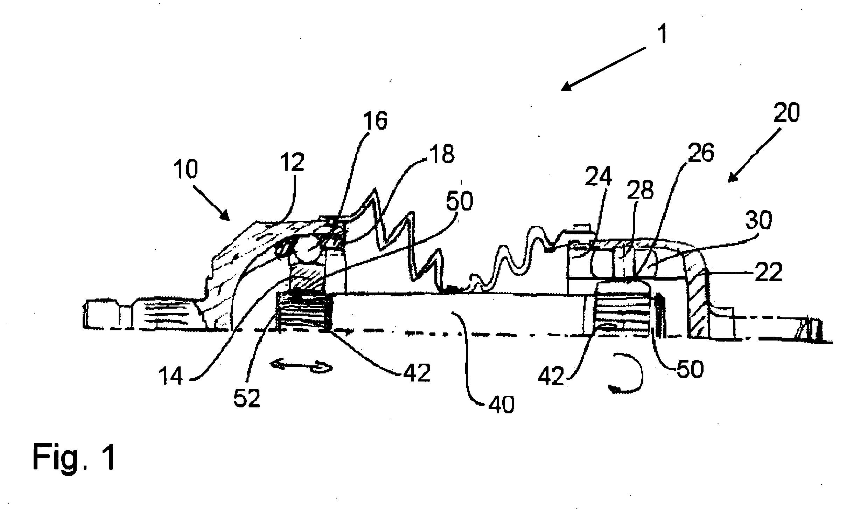

Fig. 1: einen Schnitt durch eine erfindungsgemäße Gleichlaufgelenkwelle.

Die einzige Figur der Anmeldung illustriert eine erfindungsgemäße Gleichlaufgelenkwelle 1 für ein Kraftfahrzeug. Die Gleichlaufgelenkwelle 1 weist außenseitig ein Gleichlaufgelenk 10 auf, welches eine außenliegende Kugelschale 12 und einen innenliegenden Kugelstern 14 umfasst. Zwischen Kugelschale 12 und Kugelstern 14 ist eine Mehrzahl von Lagerkugeln 16 angeordnet, die in einem Kugelkäfig 18 gefangen sind. Außenseitig ist das Gleichlaufgelenk 10 mit einer Außenverzahnung versehen zum Anschluss an die Radaufhängung eines (gelenkten) Antriebsrad. Der Aufbau des Gleichlaufgelenks entspricht insoweit demjenigen der aus dem Stand der Technik vorbekannten Gleichlaufgelenke.

Das innenseitige Ende der erfindungsgemäßen Gleichlaufgelenkwelle 1 wird von einem Verschiebegelenk 20 gebildet, welches eine Tulpe 22 aufweist. In der Innenfläche der Tulpe 27 ist eine Mehrzahl von in Längsrichtung ausgedehnten und entlang des Innenumfangs gleichmäßig verteilten Laufbahnen 24 ausgebildet. Innerhalb der Tulpe ist ein Tripodestern 26 angeordnet, der seinerseits eine Mehrzahl von Lagerzapfen 28 ausbildet, wobei jeder Laufbahn 24 der Tulpe 22 ein Zapfen 28 des Tripodesterns 26 zugeordnet ist. Jeder Lagerzapfen 28 trägt dabei ein Wälzlager 30, welches mit seinem Außenring in eine Laufbahn 24 eingefügt ist. Dabei ist das Wälzlager 30 in der ihn aufnehmenden Laufbahn 24 in Axialrichtung verschieblich. Die Lagerzapfen 28 und die Innenringe der Wälzlager 30 sind dabei so ausgestaltet, dass die Wälzlager 30 eine Kippbewegung gegen die Längsachse der Lagerzapfen 28 ausführen können. Hierzu sind aus dem Stand der Technik bereits verschiedene geeignete Konstruktionen bekannt. Bevorzugt ist hier eine kugelige Ausbildung des Lagerzapfens 28 (in Abweichung von der Figur 1), wobei die Innenfläche des Innenrings des Wälzlagers 30 komplementär ausgebildet ist, so dass das Wälzlager 30 eine Kippbewegung auf dem ihn tragenden Lagerzapfen 28 ausführen kann. Eine entsprechende Konstruktion ist beispielsweise aus der DE 103 25 116 bekannt, die ebenfalls auf die Inhaberin der vorliegenden Anmeldung zurückgeht. Alternativ ist es aber auch möglich die Lagerzapfen 28 mit einem zylindrischen Querschnitt auszugestalten. Die Wälzlager 30 sind dann so ausgestaltet, dass der Innenring des Wälzlagers 30 eine Kippbewegung relativ zum Außenring des Wälzlagers 30 ausführen kann. Beide Ausführungsformen sind grundsätzlich geeignet für die Verwendung im Rahmen einer edindungsgemäßen Gleichlaufgelenkwelle.

Weiterhin umfasst die erfindungsgemäße Gleichlaufgelenkwelle eine Verbindungswelle 40, die drehfest verbunden ist einerseits mit dem Kugelstern 14 des Gleichlaufgelenks 10 und andererseits dem Tripodestern 26 des Verschiebegelenks 20. Die drehfeste Verbindung zwischen der Verbindungswelle 40 und dem Kugelstern 14 einerseits und der Verbindungswelle 40 und dem Tripodestern 26 anderseits sind beide als Passverzahnungen 42 ausgeführt, d. h. die Verbindungswelle 40 weist an ihren beiden Enden Außenverzahnungen auf, die in komplementär ausgebildete Innenverzahnungen auf dem Innenumfang des Kugelsterns 14 des Gleichlaufgelenks 10 bzw. des Tripodesterns 26 des Verschiebegelenks eingreifen

Erfindungsgemäß ist nun der Sitz des Kugelsterns 14 auf dem außenseitigen Ende der Verbindungswelle 40 in Axialrichtung als Schiebesitz ausgebildet. Dies bedeutet, dass zum Verschieben des Kugelsterns 14 auf der Verbindungswelle 10 in Axialrichtung eine Axialkraft von weniger als 500 kN, insbesondere weniger als 100 kN aufgewendet werden muss. Besonders bevorzugt ist es, wenn die zum Verschieben des Kugelsterns 14 erforderliche Axialkraft im Bereich einiger hundert Newton, insbesondere im Bereich von 100 N liegt. Als besonders geeignete Passverzahnungen hat sich für die Realisierung des Schiebesitzes des Kugelsterns 14 auf der Verbindungswelle 10 eine Evolventenverzahnung erwiesen.

Besondere Vorteile ergeben sich, wenn das Gleichlaufgelenk 10 ein Winkelspiel von 0,3° oder geringer aufweist, wobei sich herausgestellt hat, dass die NVH-Eigenschaften der erfindungsgemäßen Gleichlaufgelenkwelle 1 umso besser sind, je geringer das Winkelspiel des Gleichlaufgelenks 10 ist. Im Rahmen des erfindungsgemäßen Herstellungsverfahrens wird daher bei der Herstellung der erfindungsgemäße Gleichlaufgelenkwelle 1 ein Gleichlaufgelenk 10 selektiert werden, dessen Winkelspiel in den angegebenen Grenzen liegt.

An ihrem innenliegenden Ende bildet die Verbindungswelle 40 ebefalls eine Passverzahnung 42 aus, die von einer komplementär ausgebildeten Verzahnung auf dem Innenumfang des Tripodesterns 26 aufgenommen wird. Dabei wird hier eine drehfeste Verbindung zwischen Tripodestern 26 und Verbindungswelle 40 realisiert, die, sowohl in Axialrichtung als auch in Drehrichtung praktisch spielfrei ist. Gegen ein unbeabsichtigtes Lösen des Tripodesterns 26 vom innenliegenden Ende der Verbindungswelle 40 im Laufe der Lebensdauer der erfindungsgemäßen Gleichlaufgelenkwelle 1 ist am innenliegenden Ende der Verbindungswelle 40 ein Sicherungselement 50 vorgesehen, welches den Tripodestern 26 auf dem Ende der Verbindungswelle 40 sichert. Dabei kann das Sicherungselement 50 beispielsweise als Sicherungsring ausgebildet sein, welcher in eine auf dem Außenumfang der Verbindungswelle 40 ausgeführten Nut eingreift.

Die erfindungsgemäßen Vorteile werden nun realisiert, indem das Winkelspiel zwischen der Verbindungswelle 40 und der Tulpe 22 des Verschiebegelenks so eingestellt wird, dass es zwischen 0,3° und 1,4° beträgt. Besondere Vorteile ergeben sich, wenn das Winkelspiel zumindest 0,6° beträgt. Dabei ist es insbesondere vorteilhaft, wenn das Winkelspiel im Wesentlichen nur aus dem Winkelspiel des Verschiebegelenks 20 resultiert, die drehfeste Verbindung zwischen Verbindungswelle 40 und Tripodestern 26 hingegen in Drehrichtung praktisch spielfrei ist.

Eine weitere Verbesserung der Betriebssicherheit der erfindungsgemäßen Gleichlaufgelenkwelle 1 kann erzielt werden, wenn auch der Kugelstern 14 des Gleichlaufgelenks 10 mittels eines geeigneten Sicherungselements 50, welches wiederum als Sicherungsring ausgestaltet sein kann, auf dem außenliegenden Ende der Verbindungswelle 40 gesichert wird.

Die NVH-Eigenschaften der erfindungsgemäßen Gleichlaufgelenkwellen können darüber hinaus noch verbessert werden, wenn die Relativbewegung des Kugelsterns 14 des Gleichlaufgelenks 10 und der Verbindungswelle 40 durch Einfügung eines Dämpfungselements 50 zw ischen Kugelstern 14 und Verbindungswelle 40 gedämpft wird. Dabei kann dieses Dämpfungselement aus einem Elastomer bestehen und unmittelbar angrenzend an das zur Sicherung des Kugelsterns 14 auf dem außenliegenden Ende der Verbindungswelle 40 angeordneten Sicherungselements 50 angeordnet werden. Der Schiebesitz des Kugelsterns 14 auf dem außenliegenden Ende der Verbindungswelle 40 in Axialrichtung kann beispielsweise realisiert werden, indem Kugelstern 14 und Verbindungswelle 40 eine Passverzahnung mit Evolventenflanken ausbilden, deren Abmessungen so bemessen sind, dass sich ohne weitere Bearbeitung der Passverzahnung ein Presssitz des Kugelsterns 14 auf dem außenliegenden Ende der Verbindungswelle 40 ergeben würde. Nachfolgend kann dann die Außenverzahnung des außenliegenden Endes der Verbindungswelle 40 oder die Innenverzahnung des Kugelsterns 14 oder beide Verzahnungen einer Behandlung z. B. mittels Sandstrahlen unterzogen werden, aus der ein Schiebesitz im Sinne der vorliegenden Anmeldung resultiert.

Ein Verfahren zur Herstellung einer Gleichlaufgelenkwelle 1 mit den erfindungsgemäßen Eigenschaften umfasst in der Regel die Selektion von Vemchiebegelenken 10 mit einem Winkelspiel, welches in dem angegebenen Bereich liegt. Darüberhinaus umfasst es die Selektion einer Verbindungswelle 40 und eines Kugelsterns 14, bei denen ein Schiebesitz des Kugelsterns 14 mit den angegebenen Eigenschaften realisiert wird. Auch hier wird in der Regel im Rahmen des erfindungsgemäßen Verfahrens ein entsprechender Selektionsschritt ausgeführt werden.

## Patentansprüche

1. Gleichlaufgelenkwelle (1) für ein Kfz, mit den folgenden Merkmalen:
a. einem Gleichlaufgelenk (10) mit einer außenliegenden Kugelschale (12) und einem innenliegenden Kugelstern (14),
b. einem Verschiebegelenk (20) mit einer Tulpe (22), die eine Mehrzahl von in Längsrichtung ausgedehnten und entlang des Innenumfangs gleich verteilten Laufbahnen (24) ausbildet, und einem mehrere Zapfen (28) ausbildenden Stern wobei jeder Laufbahn (24) der Tulpe (22) ein Zapfen (28) des Sterns zugeordnet ist, und
c. einer Verbindungswelle (40), die drehfest verbunden ist mit
i. dem Kugelstern (14) des Gleichlaufgelenks (10), wobei die drehfeste Verbindung zwischen Kugelstern (14) und Verbindungswelle (40) in Axialrichtung einen Schiebesitz ausbildet, und
ii. dem Stern des Verschiebegelenks (20),
**dadurch gekennzeichnet, dass**
d. die zum Verschieben des Kugelsterns (14) auf der Verbindungswelle (40) erforderliche Axialkraft geringer ist als 500 kN, bevorzugt geringer ist als 100 kN, und
e. das Winkelspiel zwischen Verbindungswelle (40) und Tulpe des Verschiebegelenks zwischen 0,3° und 1,4° beträgt, und dass
der Stern einen Tripodestern (26) ist.

2. Gleichlaufgelenkwelle (1) gemäß Anspruch 1, **dadurch gekennzeichnet, dass** die drehfeste Verbindung zwischen Verbindungswelle (40) und Kugelstern und / oder Verbindungswelle (40) und Tripodestern (26) als Passverzahnung (42) ausgebildet sind.

3. Gleichlaufgelenkwelle (1) gemäß Anspruch 1, **dadurch gekennzeichnet, dass** das Winkelspiel zwischen Verbindungswelle (40) und Tulpe (22) des Verschiebegelenks (20) größer ist als 0,6°.

4. Gleichlaufgelenkwelle (1) gemäß Anspruch 2, **dadurch gekennzeichnet, dass** die Passverzahnung (42) zwischen Verbindungswelle (40) und Kugelstern Evolventenflanken aufweist.

5. Gleichlaufgelenkwelle (1) gemäß Anspruch 2, **dadurch gekennzeichnet, dass** die Passverzahnung (42) zwischen Verbindungswelle (40) und Kugelstern (14) Kerbflanken oder Keilflanken aufweist.

6. Gleichlaufgelenkwelle (1) gemäß Anspruch 1, **dadurch gekennzeichnet, dass** das Winkelspiel zwischen Verbindungswelle (40) und Kugelschale (12) des Gleichlaufgelenks (1) geringer ist als 0,6°, bevorzugt 0,3° oder weniger beträgt.

7. Gleichlaufgelenkwelle (1) gemäß Anspruch 1, **dadurch gekennzeichnet, dass** die Axialbewegung des Kugelsterns (14) auf der Verbindungswelle (40) durch ein Sicherungselement (50) limitiert ist.

8. Gleichlaufgelenkwelle (1) gemäß Anspruch 1, **dadurch gekennzeichnet, dass** zur Dämpfung der Axialbewegung des Kugelsterns (14) auf der Verbindungswelle (40) ein Dämpfungselement (52) vorgesehen ist.

9. Gleichlaufgelenkwelle (1) gemäß Anspruch 1, **dadurch gekennzeichnet, dass** der Außendurchmesser der Verbindungswelle (40) zumindest 35 % des Außendurchmessers des Kugelsterns beträgt.

10. Verfahren zur Herstellung einer Gleichlaufgelenkwelle (1) für ein Kfz, die folgenden Verfahrensschritte aufweisend:
a. Bereitstellen eines Gleichlaufgelenks (40) mit einer außenliegenden Kugelschale (12) und einem innenliegenden Kugelstern (14),
b. Bereitstellen eines Verschiebegelenks (20) mit einer Tulpe (22), die eine Mehrzahl von in Längsrichtung ausgedehnten und entlang des Innenumfangs gleichverteilten Laufbahnen (24) ausbildet, und einem mehrere Zapfen (28) ausbildenden Tripodestern (26), wobei jeder Laufbahn (24) der Tulpe (22) ein Zapfen (28) des Tripodesterns (26) zugeordnet ist, und
c. Bereitstellen einer Verbindungswelle (40)
d. Herstellen einer drehfesten Verbindung zwischen Kugelstern (14) und Verbindungswelle (40), wobei die drehfeste Verbindung in Axialrichtung einen Schiebesitz ausbildet und die zum Verschieben des Kugelsterns (14) auf der Verbindungswelle (40) erforderliche Axialkraft geringer ist als 500 kN, bevorzugt geringer ist als 100 kN
e. Herstellen einer drehfesten Verbindung zwischen Tripodestern (26) und Verbindungswelle (40), wobei das Winkelspiel zwischen Verbindungswelle (40) und Tulpe (22) des Verschiebegelenks (20) zwischen 0,3° und 1,4° beträgt.

11. Verfahren gemäß Anspruch 10, **dadurch gekennzeichnet, dass** die drehfeste Verbindung zwischen Tripodestern (26) und Verbindungswelle (40) im Wesentlichen spielfrei in Axialrichtung und in Drehrichtung ist.

12. Verfahren gemäß Anspruch 10, **dadurch gekennzeichnet, dass** der Schiebesitz des Kugelsterns (14) auf der Verbindungswelle (40) im Wesentlichen spielfrei in Drehrichtung ist.

13. Verfahren gemäß Anspruch 10, **dadurch gekennzeichnet, dass** die drehfeste Verbindung zwischen Verbindungswelle (40) und Kugelstern (14) und / oder Verbindungswelle (40) und Tripodestern (26) als Passverzahnung ausgebildet sind.

14. Verfahren gemäß Anspruch 10, **dadurch gekennzeichnet, dass** das Winkelspiel zwischen Verbindungswelle (40) und Tulpe (22) des Verschiebegelenks (20) größer ist als 0,6°.

15. Verfahren gemäß Anspruch 13, **dadurch gekennzeichnet, dass** die Passverzahnung (42) zwischen Verbindungswelle (40) und Kugelstern (14) Evolventenflanken aufweist.

16. Verfahren gemäß Anspruch 13, **dadurch gekennzeichnet, dass** die Passverzahnung (42) zwischen Verbindungswelle (40) und Kugelstern (14) Kerbflanken oder Keilflanken aufweist.

17. Verfahren gemäß Anspruch 10, **dadurch gekennzeichnet, dass** das Winkelspiel zwischen Verbindungswelle (40) und Kugelschale (12) des Gleichlaufgelenks (10) geringer ist als 0,6°, bevorzugt 0,3° oder weniger beträgt.

18. Verfahren gemäß Anspruch 10, **dadurch gekennzeichnet, dass** zur Limitierung der Axialbewegung des Kugelsterns (14) auf der Verbindungswelle (40) ein Sicherungselement (50) auf der Verbindungswelle (40) angeordnet wird.

19. Verfahren gemäß Anspruch 10, **dadurch gekennzeichnet, dass** zur Dämpfung der Axialbewegung des Kugelsterns auf der Verbindungswelle ein Dämpfungselement auf der Verbindungswelle angeordnet wird.

20. Verfahren gemäß Anspruch 10, **dadurch gekennzeichnet, dass** der Außendurchmesser der bereitgestellten Verbindungswelle (40) zumindest 35 % des Außendurchmessers des Kugelsterns (14) beträgt.

## Claims

1. Constant-velocity joint shaft (1) for a motor vehicle, with the following features:
a. a constant-velocity joint (10) with an outer spherical shell (12) and an inner ball star (14),
b. a sliding joint (20) with a tulip (22) forming a plurality of longitudinally extending raceways (24) which are equally distributed along the inner circumference, and a star forming several pins (28), with one pin (28) of the star being assigned to each raceway (24) of the tulip (22), and
c. a connecting shaft (40) which is non-rotatably connected to
i. the ball star (14) of the constant-velocity joint (10), with the non-rotatable connection between the ball star (14) and the connecting shaft (40) forming a sliding fit in the axial direction, and
ii. the star of the sliding joint (20),
**characterised in that**
d. the axial force required for sliding the ball star (14) on the connecting shaft (40) is lower than 500 kN, preferably lower than 100 kN, and
e. the angular clearance between the connecting shaft (40) and the tulip of the sliding joint is between 0.3° and 1.4°, and that the star is a tripod star (26).

2. Constant-velocity joint shaft (1) according to claim 1, **characterised in that** the non-rotatable connection between the connecting shaft (40) and the ball star and/or the connecting shaft (40) and the tripod star (26) is configured as a spline (42).

3. Constant-velocity joint shaft (1) according to claim 1, **characterised in that** the angular clearance between the connecting shaft (40) and the tulip (22) of the sliding joint (20) is greater than 0.6°.

4. Constant-velocity joint shaft (1) according to claim 2, **characterised in that** the spline (42) between the connecting shaft (40) and the ball star has involute flanks.

5. Constant-velocity joint shaft (1) according to claim 2, **characterised in that** the spline (42) between the connecting shaft (40) and the ball star (14) has serration flanks or straight-sided flanks.

6. Constant-velocity joint shaft (1) according to claim 1, **characterised in that** the angular clearance between the connecting shaft (40) and the spherical shell (12) of the constant-velocity joint (1) is less than 0.6°, preferably 0.3° or less.

7. Constant-velocity joint shaft (1) according to claim 1, **characterised in that** the axial movement of the ball star (14) on the connecting shaft (40) is limited by a securing element (50).

8. Constant-velocity joint shaft (1) according to claim 1, **characterised in that** a damping member (52) is provided for damping the axial movement of the ball star (14) on the connecting shaft (40).

9. Constant-velocity joint shaft (1) according to claim 1, **characterised in that** the external diameter of the connecting shaft (40) is at least 35% of the external diameter of the ball star.

10. Method for producing a constant-velocity joint shaft (1) for a motor vehicle, comprising the following method steps:
a. providing a constant-velocity joint (40) with an outer spherical shell (12) and an inner ball star (14),
b. providing a sliding joint (20) with a tulip (22) forming a plurality of longitudinally extending raceways (24) which are equally distributed along the inner circumference, and a tripod star (26) forming several pins (28), with one pin (28) of the tripod star (26) being assigned to each raceway (24) of the tulip (22), and
c. providing a connecting shaft (40)
d. establishing a non-rotatable connection between the ball star (14) and the connecting shaft (40), with the non-rotatable connection forming a sliding fit in the axial direction, and the axial force required for sliding the ball star (14) on the connecting shaft (40) is lower than 500 kN, preferably lower than 100 kN,
e. establishing a non-rotatable connection between the tripod star (26) and the connecting shaft (40), wherein the angular clearance between the connecting shaft (40) and the tulip (22) of the sliding joint (20) is between 0.3° and 1.4°.

11. Method according to claim 10, **characterised in that** the non-rotatable connection between the tripod star (26) and the connecting shaft (40) is substantially free from clearance in the axial direction and in the direction of rotation.

12. Method according to claim 10, **characterised in that** the sliding fit of the ball star (14) on the connecting shaft (40) is substantially free from clearance in the direction of rotation.

13. Method according to claim 10, **characterised in that** the non-rotatable connection between the connecting shaft (40) and the ball star (14) and/or the connecting shaft (40) and the tripod star (26) is configured as a spline.

14. Method according to claim 10, **characterised in that** the angular clearance between the connecting shaft (40) and the tulip (22) of the sliding joint (20) is greater than 0.6°.

15. Method according to claim 13, **characterised in that** the spline (42) between the connecting shaft (40) and the ball star (14) has involute flanks.

16. Method according to claim 13, **characterised in that** the spline (42) between the connecting shaft (40) and the ball star (14) has serration flanks or straight-sided flanks.

17. Method according to claim 10, **characterised in that** the angular clearance between the connecting shaft (40) and the spherical shell (12) of the constant-velocity joint (10) is less than 0.6°, preferably 0.3° or less.

18. Method according to claim 10, **characterised in that** a securing element (50) for limiting the axial movement of the ball star (14) on the connecting shaft (40) is disposed on the connecting shaft (40).

19. Method according to claim 10, **characterised in that** a damping member for damping the axial movement of the ball star on the connecting shaft is disposed on the connecting shaft.

20. Method according to claim 10, **characterised in that** the external diameter of the connecting shaft (40) provided is at least 35% of the external diameter of the ball star (14).

## Revendications

1. Arbre à joint homocinétique (1) pour un véhicule automobile, présentant les caractéristiques suivantes :
a. un joint homocinétique (10) comprenant une coque sphérique (12) située à l'extérieur et un croisillon sphérique (14) situé à l'intérieur,
b. un joint coulissant (20) ayant une tulipe (22) formant une pluralité de chemins de roulement (24) s'étendant longitudinalement et répartis uniformément suivant la circonférence intérieure, ainsi qu'une étoile formant plusieurs tenons (28), à chacun des chemins de roulement (24) de ladite tulipe (22) étant associé un tenon (28) de ladite étoile, et
c. un arbre de liaison (40) qui est solidaire en rotation :
i. dudit croisillon sphérique (14) du joint homocinétique (10), la liaison solidaire en rotation entre ledit croisillon sphérique (14) et ledit arbre de liaison (40) formant un ajustement appuyé dans la direction axiale, et
ii. de ladite étoile du joint coulissant (20),
**caractérisé par le fait que**
d. la force axiale nécessaire à déplacer ledit croisillon sphérique (14) sur ledit arbre de liaison (40) est inférieure à 500 kN, de préférence inférieure à 100 kN, et que
e. le jeu angulaire entre ledit arbre de liaison (40) et ladite tulipe du joint coulissant est compris entre 0,3° et 1,4°, et que
ladite étoile est une étoile tripode (26).

2. Arbre à joint homocinétique (1) selon la revendication 1, **caractérisé par le fait que** la liaison solidaire en rotation entre ledit arbre de liaison (40) et ledit croisillon sphérique et/ou ledit arbre de liaison (40) et ladite étoile tripode (26) est réalisée sous forme d'une denture d'ajustement (42).

3. Arbre à joint homocinétique (1) selon la revendication 1, **caractérisé par le fait que** le jeu angulaire entre ledit arbre de liaison (40) et ladite tulipe (22) du joint coulissant (20) est supérieur à 0,6°.

4. Arbre à joint homocinétique (1) selon la revendication 2, **caractérisé par le fait que** ladite denture d'ajustement (42) entre ledit arbre de liaison (40) et ledit croisillon sphérique présente des flancs en développante.

5. Arbre à joint homocinétique (1) selon la revendication 2, **caractérisé par le fait que** ladite denture d'ajustement (42) entre ledit arbre de liaison (40) et ledit croisillon sphérique (14) présente des flancs angulaires ou des flancs parallèles.

6. Arbre à joint homocinétique (1) selon la revendication 1, **caractérisé par le fait que** le jeu angulaire entre ledit arbre de liaison (40) et la coque sphérique (12) du joint homocinétique (1) est inférieur à 0,6°, de préférence il fait 0,3° ou moins.

7. Arbre à joint homocinétique (1) selon la revendication 1, **caractérisé par le fait que** le mouvement axial du croisillon sphérique (14) sur ledit arbre de liaison (40) est limité par un élément de sécurité (50).

8. Arbre à joint homocinétique (1) selon la revendication 1, **caractérisé par le fait que** l'on prévoit un élément amortisseur (52) pour amortir le mouvement axial du croisillon sphérique (14) sur ledit arbre de liaison (40).

9. Arbre à joint homocinétique (1) selon la revendication 1, **caractérisé par le fait que** le diamètre extérieur de l'arbre de liaison (40) fait au moins 35 % du diamètre extérieur du croisillon sphérique.

10. Procédé de fabrication d'un arbre à joint homocinétique (1) pour un véhicule automobile, comprenant les étapes de procédé suivantes :
a. fournir un joint homocinétique (10) comprenant une coque sphérique (12) située à l'extérieur et un croisillon sphérique (14) situé à l'intérieur,
b. fournir un joint coulissant (20) ayant une tulipe (22) formant une pluralité de chemins de roulement (24) s'étendant longitudinalement et répartis uniformément suivant la circonférence intérieure, ainsi qu'une étoile tripode (26) formant plusieurs tenons (28), à chacun des chemins de roulement (24) de ladite tulipe (22) étant associé un tenon (28) de ladite étoile tripode (26), et
c. fournir un arbre de liaison (40),
d. réaliser une liaison solidaire en rotation entre ledit croisillon sphérique (14) et ledit arbre de liaison (40), la liaison solidaire en rotation formant un ajustement appuyé dans la direction axiale et la force axiale nécessaire à déplacer ledit croisillon sphérique (14) sur ledit arbre de liaison (40) étant inférieure à 500 kN, de préférence inférieure à 100 kN,
e. réaliser une liaison solidaire en rotation entre ladite étoile tripode (26) et ledit arbre de liaison (40), le jeu angulaire entre ledit arbre de liaison (40) et ladite tulipe (22) du joint coulissant (20) étant compris entre 0,3° et 1,4°.

11. Procédé selon la revendication 10, **caractérisé par le fait que** la liaison solidaire en rotation entre ladite étoile tripode (26) et l'arbre de liaison (40) est pour l'essentiel exempte de jeu dans la direction axiale et dans la direction de rotation.

12. Procédé selon la revendication 10, **caractérisé par le fait que** l'ajustement appuyé du croisillon sphérique (14) sur l'arbre de liaison (40) est pour l'essentiel exempt de jeu dans la direction de rotation.

13. Procédé selon la revendication 10, **caractérisé par le fait que** la liaison solidaire en rotation entre ledit arbre de liaison (40) et ledit croisillon sphérique (14) et/ou ledit arbre de liaison (40) et ladite étoile tripode (26) est réalisée comme denture d'ajustement.

14. Procédé selon la revendication 10, **caractérisé par le fait que** le jeu angulaire entre ledit arbre de liaison (40) et ladite tulipe (22) du joint coulissant (20) est supérieur à 0,6°.

15. Procédé selon la revendication 13, **caractérisé par le fait que** ladite denture d'ajustement (42) entre ledit arbre de liaison (40) et ledit croisillon sphérique (14) présente des flancs en développante.

16. Procédé selon la revendication 13, **caractérisé par le fait que** ladite denture d'ajustement (42) entre ledit arbre de liaison (40) et ledit croisillon sphérique (14) présente des flancs angulaires ou des flancs parallèles.

17. Procédé selon la revendication 10, **caractérisé par le fait que** le jeu angulaire entre ledit arbre de liaison (40) et la coque sphérique (12) du joint homocinétique (1) est inférieur à 0,6°, de préférence il fait 0,3° ou moins.

18. Procédé selon la revendication 10, **caractérisé par le fait que** pour limiter le mouvement axial du croisillon sphérique (14) sur ledit arbre de liaison (40), un élément de sécurité (50) est disposé sur ledit arbre de liaison (40).

19. Procédé selon la revendication 10, **caractérisé par le fait que** pour amortir le mouvement axial du croisillon sphérique sur ledit arbre de liaison, un élément amortisseur est disposé sur l'arbre de liaison.

20. Procédé selon la revendication 10, **caractérisé par le fait que** le diamètre extérieur de l'arbre de liaison (40) fourni fait au moins 35 % du diamètre extérieur du croisillon sphérique (14).
